(19) Europäisches Patentamt
European Patent Office
Office européen des brevets

(11) Veröffentlichungsnummer: **0 022 199**
**A1**

(12) # EUROPÄISCHE PATENTANMELDUNG

(21) Anmeldenummer: **80103448.9**

(22) Anmeldetag: **20.06.80**

(51) Int. Cl.$^3$: **C 01 B 11/06**

(30) Priorität: **29.06.79 DE 2926413**

(43) Veröffentlichungstag der Anmeldung:
**14.01.81 Patentblatt 81/2**

(84) Benannte Vertragsstaaten:
**BE DE FR GB IT**

(71) Anmelder: **BAYER AG**
**Zentralbereich Patente, Marken und Lizenzen**
**D-5090 Leverkusen 1, Bayerwerk(DE)**

(72) Erfinder: **Eberlein, Richard, Dr.**
**Driescher Hecke 19**
**D-5090 Leverkusen 1(DE)**

(72) Erfinder: **Miksits, Michael, Dr.**
**Neidenburger Strasse 49**
**D-4100 Duisburg 26(DE)**

(72) Erfinder: **Berndt, Hans**
**Am Katterbach 31**
**D-5060 Bergisch-Gladbach 2(DE)**

(54) **Verfahren zur Herstellung natriumchloridarmer Bleichlauge.**

(57) Es wird ein Verfahren zur Herstellung natriumchloridarmer Bleichlauge durch Kristallisation von Natriumhypochlorid bei Temperaturen unterhalb - 10°C aus natriumchloridreicher Bleichlauge, Abtrennen und Auftauen des Kristallisats beschrieben, das dadurch gekennzeichnet ist, daß die Kristallisation in Gegenwart von Natriumsalzen schwacher Säuren erfolgt.

EP 0 022 199 A1

0022199

BAYER AKTIENGESELLSCHAFT 5090 Leverkusen, Bayerwerk
Zentralbereich
Patente, Marken und Lizenzen Dp-mo

# Verfahren zur Herstellung natriumchloridarmer Bleichlauge

Bleichlauge wird durch Einleiten von Chlor in Natronlauge oder direkt bei der Elektrolyse von Natriumchlorid ohne Diaphragma oder Quecksilberkathode entsprechend

$$Cl_2 + 2\ NaOH \longrightarrow NaClO + NaCl + H_2O$$

erhalten.

Das molare Verhältnis von NaClO zu NaCl solcher Bleichlaugen liegt bei etwa 1.

Es wurden bereits Verfahren vorgeschlagen, nach denen natriumchloridarme Bleichlaugen mit einem molaren Verhältnis NaClO zu NaCl von bis zu 6 erhalten werden können. Z.B. wird gemäß DE-AS 1.467,145 vorgeschlagen, die Reaktion zwischen Chlor und Natriumhydroxid in Gegenwart von NaCl-Kristallen unter Kühlung bei Temperaturen unterhalb 30°C in einer Wirbelschicht durchzuführen, wobei das während der Reaktion entstehende NaCl kristallisiert und unterhalb der Wirbelschicht in Form großer Kristalle abgezogen wird.

Dieses Verfahren zur Herstellung von natriumchloridarmer Bleichlauge geht von den Rohprodukten Chlor und Natronlauge aus, wobei die Reaktionsführung bezüglich Aufrechterhaltung der Wirbelschicht und Abzug der NaCl-Kristalle besondere Aufmerksamkeit verlangt.

Häufig fällt jedoch natriumchloridreiche Bleichlauge bereits als Zwangsanfallsprodukt an. Z.B. fällt Bleichlauge mit einem molaren Verhältnis von NaClO zu NaCl von ca. 1 an, wenn aus chlorhaltigen Gasen das Chlor durch Umsetzung mit Natronlauge entfernt wird.

Aufgabe der vorliegenden Erfindung ist es, aus natriumchloridreicher Bleichlauge natriumchloridarme Bleichlauge herzustellen. Es ist bekannt, daß aus Bleichlauge bei Temperaturen unterhalb -10°C farblose Kristalle auskristallisieren, denen die Formel $NaClO \cdot 6H_2O$ zukommt. Jedoch ist eine solche Umkristallisation wegen der geringen Kristallisationsgeschwindigkeit und der schlechten Filtrierbarkeit der Kristalle für die industrielle Anwendung nicht geeignet.

Es wurde nun gefunden, daß das Kristallisationsverhalten der Bleichlauge erheblich verbessert werden kann, wenn während der Kristallisation Natriumsalze schwacher Säuren zugegen sind.

Gegenstand der vorliegenden Erfindung ist daher ein Verfahren zur Herstellung von natriumchloridarmer Bleichlauge durch Kristallisation von Natriumhypochlorit bei

Temperaturen unterhalb -10°C aus natriumchloridreicher Bleichlauge, Abtrennen und Auftauen des Kristallisats, das dadurch gekennzeichnet ist, daß die Kristallisation in Gegenwart von Natriumsalzen schwacher Säuren erfolgt.

Die Begriffe "natriumchloridarme" und "natriumchloridreiche" Bleichlauge im Sinne der vorliegenden Erfindung sollen nicht quantitativ absolut definiert sein, sondern als relativ verstanden werden. Natriumchloridreiche Bleichlauge soll unabhängig von ihrem Natriumchloridgehalt das Ausgangsprodukt des Verfahrens bezeichnen, aus dem sich aufgrund der Kristallisationsentmischung schließlich die natriumchloridarme Bleichlauge als Endprodukt ergibt. Selbstverständlich ist es möglich, die Umkristallisation mehrmals nacheinander durchzuführen, so daß die Bleichlauge in jeder Umkristallisationsstufe weiter an Natriumchlorid verarmt wird. Die aus der jeweils vorhergehenden Stufe erhaltene natriumchloridarme Bleichlauge wird dann als "natriumchloridreiche" Bleichlauge in die nächste Stufe eingeführt.

Im allgemeinen wird bei der einstufigen Umkristallisation Bleichlauge mit einem molaren Verhältnis $NaClO/NaCl = 1$ eingesetzt. Als natriumchloridarme Bleichlauge wird dann im allgemeinen solche mit einem Verhältnis $NaClO/NaCl = 2,5$ bis 6, vorzugsweise 2,5 bis 4 erhalten.

Die erhaltene natriumchloridarme Bleichlauge ist hochkonzentriert, da der Wassergehalt lediglich durch das in das Kristallisat eingebaute Kristallwasser und einen geringen Anteil anhaftender Mutterlauge bestimmt ist. So

wird z.B. aus einer durch Chlorierung von Natronlauge mit 220 g/l NaOH erhaltenen natriumchloridreichen Bleichlauge mit 166 g/l NaClO und 131 g/l NaCl eine natriumchloridarme Bleichlauge mit 260 g/l NaClO und 90 g/l NaCl erhalten. Daraus kann durch Verdünnen mit Wasser eine übliche "Haushaltsbleichlauge" mit 52 g/l NaClO und 18 g/l NaCl gewonnen werden.

Das bei der Kristallisation zuerst ausgefällte Kristallisat hat das höchste Verhältnis NaClO/NaCl, da sich der NaCl -Gehalt in der Fällbrühe im Laufe des Kristallisationsvorganges anreichert. Um natriumchloridarme Bleichlaugen mit hohem molaren Verhältnis NaClO/NaCl zu erhalten, kann der Kristallisationsvorgang entweder in frühem Stadium abgebrochen werden, oder der Auftauvorgang fraktioniert werden, wobei das zuletzt bei der höchsten Temperatur aufgetaute Kristallisat die an NaCl ärmste Bleichlaugefraktion liefert.

Als Natriumsalze schwacher Säuren, die erfindungsgemäß bei der Kristallisation zugegen sind, werden bevorzugt $Na_2CO_3$, $NaHCO_3$ und/oder $Na_4P_2O_7$ oder andere Salze der Phosphorsäure eingesetzt. Bevorzugt wird $Na_2CO_3$ eingesetzt. Die Konzentration der Salze soll zwischen 5 und 30 g/l, bevorzugt 10 bis 12 g/l in der natriumchloridreichen Bleichlauge betragen. Die Kristallisation erfolgt bevorzugt bei Temperaturen zwischen -18 bis -25°C. Die Kristallisation wird zweckmäßig durch Einführung von Kristallisationskeimen in die abgekühlte Bleichlauge eingeleitet. Als Kristallisationskeime geeignet sind $Na_2CO_3$-, $NaHCO_3$-, $Na_4P_2O_7$- oder bevorzugt zurückgeführte arteigene Bleichlaugekristalle.

Das erfindungsgemäße Verfahren kann auch kontinuierlich durchgeführt werden, indem in einen Kristallisationsturm unten abgekühlte natriumchloridreiche Bleichlauge kontinuierlich eingeführt wird und oben an NaCl angereicherte Bleichlauge überläuft. Am Boden des Kristallisationsturmes werden die natriumchloridarmen Bleichlaugekristalle abgezogen und einem gegebenenfalls fraktionierten Auftauprozess zugeführt.

Beispiel

1 Liter Bleichlauge wird mit wasserfreiem Natriumcarbonat auf 10 bis 12 g $Na_2CO_3$ eingestellt (sonst normale Einstellung). Im Methanol-Kohlensäure Thermostat (ca. -35°C halten) wird die Bleichlauge im Verlauf von 20 bis 30 Minuten auf -20°C abgekühlt. Die abgekühlte Bleichlauge muß vor dem Einleiten des Kristallisationsvorganges klar sein.

Kristallisiervorgang:

Das Becherglas aus dem Thermostaten herausnehmen, unter schwachem Umrühren ca. 2 bis 5 g Soda kalziniert einstreuen (ca. 5 sec.) und dann ca. 60 sec. rühren.

In dieser Zeit kristallisieren Flocken aus, die nach Ablauf der 60 Sekunden schon eine dichte Fällung bilden. Daran anschließend wird ca. 30 Sekunden mit dem Thermometer u.ä. an der Innenwand des Becherglases gekratzt. Es fällt ein weißlich-grüner Niederschlag aus, der sich auch viel schwerer rühren lässt. Die Temperatur steigt dabei um 3 bis 4°C auf ca. -16 bis -17°C an.

Danach erfolgt die Aufgabe der Fällbrühe auf die Drucknutsche und Trennung in 800 bis 850 ml Filtrat und 150 bis 200 ml Kristallisat im Verlauf von 10 bis 15 Minuten. Die Temperatur des Kristallisats beträgt danach ca. -12 bis -15°C.

Es empfiehlt sich die Aufteilung des Kristallisats in

drei Fraktionen à 60 ml (je nach Menge des erhaltenen Kristallisats).

Man erhält die Fraktionen bei etwa folgenden Temperaturen:

| | | |
|---|---|---|
| Fraktion | I | -15 bis -12°C |
| Fraktion | II | -12 bis - 0°C |
| Fraktion | III | 0 bis +18°C |

Fraktion III ist die chloridärmste Lösung. Je nach Schnitt der Fraktionen läßt sich ein Gehalt von mehr als 260 g/l aktives Chlor und weniger als 100 g/l Natriumchlorid erzielen.

Patentansprüche

1. Verfahren zur Herstellung natriumchloridarmer Bleichlauge durch Kristallisation von Natriumhypochlorit bei Temperaturen unterhalb -10°C aus natriumchloridreicher Bleichlauge, Abtrennung und Auftauen des Kristallisats, dadurch gekennzeichnet, daß die Kristallisation in Gegenwart von Natriumsalzen schwacher Säuren erfolgt.

2. Verfahren nach Anspruch 1, dadurch gekennzeichnet, daß als Natriumsalze schwacher Säuren $Na_2CO_3$, $NaHCO_3$, $Na_4P_2O_7$ und/oder andere Salze der Phosphorsäure eingesetzt werden.

3. Verfahren nach Anspruch 1 oder 2, dadurch gekennzeichnet, daß die Natriumsalze schwacher Säuren in Konzentrationen von 5 bis 30 g/l natriumchloridreiche Bleichlauge eingesetzt werden.

4. Verfahren nach einem der Ansprüche 1 bis 3, dadurch gekennzeichnet, daß die Kristallisation bei Temperaturen von -18 bis -25°C erfolgt.

5. Verfahren nach einem der Ansprüche 1 bis 4, dadurch gekennzeichnet, daß die natriumchloridreiche Bleichlauge ca. 131 g NaCl/l und 166 g NaClO/l enthält.

6. Verfahren nach einem der Ansprüche 1 bis 5, dadurch gekennzeichnet, daß die Kristallisation durch Zugabe von Bleichlauge-Keimkristallen eingeleitet wird.

7. Verfahren nach einem der Ansprüche 1 bis 6, dadurch gekennzeichnet, daß die natriumchloridarme Bleichlauge beim Auftauen des Kristallisats in 3 Fraktionen gewonnen wird, und zwar:
die 1. Fraktion bei -15 bis -12°C,
die 2. Fraktion bei -12 bis 0°C, und
die 3. Fraktion bei 0 bis +18°C.

Europäisches Patentamt

# EUROPÄISCHER RECHERCHENBERICHT

Nummer der Anmeldung

EP 80 10 3448.9

| Kategorie | EINSCHLÄGIGE DOKUMENTE<br>Kennzeichnung des Dokuments mit Angabe, soweit erforderlich, der maßgeblichen Teile | betrifft Anspruch | KLASSIFIKATION DER ANMELDUNG (Int.Cl.3) |
|---|---|---|---|
| | | | C 01 B 11/06 |
| | DE - C - 389 160 (B. WIEGER)<br>* Anspruch 1 *<br>-- | 1,2 | |
| | US - A - 2 918 351 (L.J. BARTON)<br>* Anspruch 1 *<br>-- | 1,2 | RECHERCHIERTE SACHGEBIETE (Int. Cl.3) |
| A | DE - C - 234 838 (SOLVAY-WERKE)<br>-- | | |
| A | FR - A - 1 072 983 (L. AUTRAN)<br>-- | | C 01 B 11/00<br>C 01 D 3/24 |
| D | DE - B - 1 467 145 (STE D'ELECTRO-CHIMIE)<br>---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 20-10-1980 | KESTEN |